# EUROPÄISCHE PATENTSCHRIFT

(11) **EP 2 754 141 B1**
(45) Veröffentlichungstag und Bekanntmachung des Hinweises auf die Patenterteilung: **20.02.2019**
(21) Anmeldenummer: 12731469.8
(22) Anmeldetag: 05.07.2012
(51) Int. Cl.: G08G 1/0967, G01C 21/34, B60K 35/00, G01C 21/26

(54) **VERFAHREN ZUM BETREIBEN EINES FAHRZEUGES**
METHOD FOR OPERATING A VEHICLE
PROCÉDÉ DE FONCTIONNEMENT D'UN VÉHICULE

(30) Priorität: 05.09.2011 DE 102011082123
(43) Veröffentlichungstag der Anmeldung: 16.07.2014
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2012/063091
(87) Internationale Veröffentlichungsnummer: WO 2013/034333

(56) Entgegenhaltungen:
- WO-A1-03/077222
- WO-A2-02/25291
- US-A1- 2010 207 787

## Beschreibung

Die Erfindung betrifft ein Verfahren zum Betreiben eines Fahrzeuges gemäß Patentanspruch 1, ein Verfahren zum Betreiben einer Recheneinheit gemäß Patentanspruch 7, ein Computerprogrammprodukt gemäß Patentanspruch 9, eine Recheneinheit eines Fahrzeuges gemäß Patentanspruch 10 und eine externe Recheneinheit gemäß Patentanspruch 11.

### Stand der Technik

Im Stand der Technik sind verschiedene Diagnosesysteme zum Überwachen der Funktionsfähigkeit von Komponenten eines Fahrzeuges bekannt. Wird beispielsweise erkannt, dass ein Sensor eines Fahrzeuges nicht korrekt funktioniert, so wird eine entsprechende Fehlermeldung erzeugt und in einem Fehlerspeicher im Fahrzeug abgespeichert und/oder dem Fahrer angezeigt.

Die WO 03/077222 A1 offenbart ein Verfahren zur automatisierten Fahrzeugführung, bei dem Infrastrukturdaten drahtlos an ein Fahrzeug übermittelt werden und Befehle für die Fahrzeugführung anhand der Infrastrukturdaten berechnet werden.

### Offenbarung der Erfindung

Die Aufgabe der Erfindung besteht darin, ein Verfahren zum Betreiben eines Fahrzeuges zu verbessern.

Die Aufgabe der Erfindung wird durch die unabhängigen Ansprüche gelöst.

Weitere vorteilhafte Ausführungsformen der Erfindung sind in den abhängigen Ansprüchen angegeben.

Ein Vorteil des erfindungsgemäßen Verfahrens besteht darin, dass eine Einschränkung einer Funktion einer Komponente eines Fahrzeuges mithilfe externer Daten überprüft werden kann. Somit kann ein Fahrer beispielsweise vor Erreichen eines Zielgebietes überprüfen, ob wenigstens eine festgelegte Fahrzeugkomponente in dem Zielgebiet uneingeschränkt funktioniert und/oder uneingeschränkt verwendet werden kann. Dies kann beispielsweise von Vorteil sein, wenn Gebiete mit extremen Temperaturen oder extremen Wetterbedingungen befahren werden. Beispielsweise können manche Komponenten des Fahrzeuges bei zu hohen oder zu niedrigen Temperaturen unter Umständen nur eingeschränkt funktionieren. Zudem können extreme Wetterbedingungen wie z.B. Schnee, Eis, Hagel, Starkregen die Funktionsfähigkeit von Fahrzeugkomponenten beeinträchtigen oder sogar funktionsunfähig machen.

Weiterhin können beispielsweise gesetzliche Bestimmungen oder Vorschriften dafür sorgen, dass bestimmte Komponenten des Fahrzeuges nicht benutzt werden dürfen. Weiterhin können beispielsweise bestimmte Fahrbahngeometrien dafür sorgen, dass manche Komponenten des Fahrzeuges, insbesondere Fahrzeugassistenzsysteme nur eingeschränkt funktionieren oder nicht verwendet werden sollten. Mithilfe des beschriebenen Verfahrens kann die Funktionsfähigkeit der Komponenten des Fahrzeuges unter Benutzung einer externen Recheneinheit auch unter Berücksichtigung von dynamischen Rahmenbedingungen überprüft werden.

Dies wird dadurch erreicht, dass die Recheneinheit des Fahrzeuges eine Anfrage an eine externe Recheneinheit sendet, wobei die Anfrage ein Zielgebiet für das Fahrzeug und eine Information für die Fahrzeugkomponente aufweist, wobei die Recheneinheit eine Information über eine Einschränkung einer Funktion der Komponente in dem Zielgebiet von der externen Recheneinheit empfängt, wobei die Recheneinheit die Information zum Betreiben des Fahrzeuges berücksichtigt und/oder an einen Fahrer ausgibt.

In einer Weiterbildung des Verfahrens wird als Komponente ein Stellglied, ein Sensor, ein Fahrzeugsystem, ein Fahrzeugassistenzsystem oder eine Funktion des Fahrzeuges wie z.B. die Art und/oder die Weise des Antriebes verwendet. Somit werden unter dem Oberbegriff Komponente jede Art von Element und/oder Verfahren verstanden, die für das Betreiben des Fahrzeuges verwendet werden können. Somit kann beispielsweise eine allumfassende Überprüfung des Fahrzeuges durchgeführt werden.

In einer Weiterbildung des Verfahrens weist die Information über die Einschränkung, die von der externen Recheneinheit übermittelt wird, eine Information über eine zuverlässige Funktion der Komponente im Zielgebiet auf. Somit kann die Recheneinheit und/oder der Fahrer entscheiden, ob die überprüfte Komponente in dem Zielgebiet benutzt werden soll oder ob beispielsweise das Zielgebiet umfahren werden soll. Beispielsweise kann es vorgesehen sein, dass in einem festgelegten Bereich, beispielsweise in einem Stadtgebiet, der Betrieb eines Verbrennungsmotors untersagt ist und nur mit einem Elektromotor das Fahrzeug betrieben werden kann. Verfügt das Fahrzeug nicht über einen Elektromotor, dann muss das Gebiet umfahren werden. Verfügt das Fahrzeug über einen Elektromotor, so kann der Fahrer beispielsweise in Abhängigkeit von der elektrischen Ladung der Batterie, die den Elektromotor versorgt, entscheiden, ob er das Gebiet durchfahren will oder nicht.

In einer weiteren Ausführungsform übermittelt die Recheneinheit bei der Abfrage zusätzlich eine aktuelle Ortposition des Fahrzeuges. Diese Information kann die Recheneinheit dazu verwenden, um beispielsweise zu überprüfen, ob auf dem Weg zum Zielgebiet eine Beeinträchtigung der Funktion der Komponente vorliegt. Abhängig von der gewählten Ausführungsform kann die aktuelle Ortposition des Fahrzeuges gleich dem Zielgebiet sein.

In einer weiteren Ausführungsform erhält die Recheneinheit des Fahrzeuges eine Information über die Einschränkung, die von dem Wetter und/oder von einer Umgebungstemperatur und/oder von einer gesetzlichen Bestimmung, und/oder von einer Verkehrsinformation und/oder einer Fahrbahngeometrie und/oder einer Fahrbahnbeschaffenheit abhängen kann.

In einer weiteren Ausführungsform übermittelt die Recheneinheit des Fahrzeuges mit der Anfrage zusätzlich eine Zeit, zu der das Fahrzeug das Zielgebiet erreichen wird. Somit kann die externe Recheneinheit bei der Überprüfung der Einschränkung der Funktion der Komponente auch die Zeit berücksichtigen. Beispielsweise können gesetzliche Beschränkungen vorliegen, die nur zeitlich für ein Zielgebiet wirksam sind. Zudem kann die externe Recheneinheit dynamische Bedingungen, wie z.B. das Wetter aufgrund von Prognosen für die angegebene Zeit berücksichtigen. Abhängig von der gewählten Ausführungsform kann die externe Recheneinheit die Zeit auch abhängig vom Abstand zwischen dem aktuellem Standort des Fahrzeuges, dem Zielgebiet und einer mittleren vorgegebenen Geschwindigkeit berechnen. Somit wird die Beurteilung der Einschränkung der Funktion der Komponente präziser.

Die externe Recheneinheit weist den Vorteil auf, dass beispielsweise auf größere Datenbänke, auf dynamische Informationen wie z.B. Wetter, Temperaturen, Verkehrsinformationen wie z.B. Staus, Umleitungen oder Baustellen zugegriffen werden kann. Somit kann mithilfe der externen Recheneinheit einer Recheneinheit eines Fahrzeuges eine bessere Information über die Funktionsfähigkeit einer Fahrzeugkomponente bereitgestellt werden. Damit wird die Sicherheit zum Betreiben der Komponente und/oder eine Planung eines Fahrers über die Nutzung der Fahrzeugkomponente verbessert.

Vorzugsweise berücksichtigt die externe Recheneinheit die aktuelle Ortposition des Fahrzeuges, die zwar mit dem Zielgebiet des Fahrzeuges zusammenfallen kann, aber nicht muss. Somit kann auch der Weg zwischen der Ortposition des Fahrzeuges und der Zielposition bei der Beurteilung der Funktionsfähigkeit der Komponente des Fahrzeuges berücksichtigt werden.

Die Erfindung wird im Folgenden anhand der Figuren näher erläutert. Es zeigen
Fig. 1 einen schematischen Aufbau eines Systems zur Durchführung des Verfahrens, und
Fig. 2 einen schematischen Programmablauf zur Durchführung des Verfahrens.

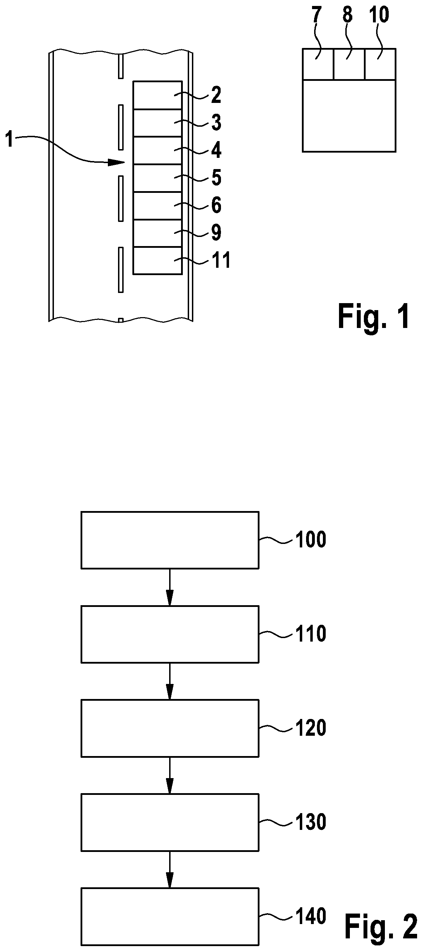

Fig. 1 zeigt in einer schematischen Darstellung eine Fahrbahn, auf der ein Fahrzeug 1 unterwegs ist. Das Fahrzeug 1 verfügt über eine Recheneinheit 3, die mit einer Schnittstelle 2 verbunden ist. Die Schnittstelle 2 ist in der Weise ausgebildet, um Daten und Informationen drahtlos zu senden und zu empfangen. Weiterhin weist das Fahrzeug 1 Sensoren 4 und Stellglieder 11, Funktionen 5 wie z.B.

Fahrerassistenzsysteme und eine Ein/Ausgabeeinheit 6 auf. Zudem ist ein Datenspeicher 9 vorgesehen. Die Recheneinheit 3 steht mit der Schnittstelle 2, den Sensoren 4, den Funktionen 5, der Ein/Ausgabe 6 und dem Datenspeicher 9 in Verbindung. Die Sensoren können beispielsweise Radarsensoren oder Videosensoren sein. Als Stellglied kann beispielsweise ein Einspritzsystem eines Verbrennungsmotors, ein Allradantrieb, ein Elektromotor, ein Verbrennungsmotor usw. sein. Als Funktion 5 kann beispielsweise eine Fahrerassistenzfunktion wie z.B. eine automatische Abstandsregelung, ein automatisches Spurhaltesystem usw. vorgesehen sein.

Zudem kann als Funktion 5 auch ein Navigationssystem mit einer Ortungseinrichtung vorgesehen sein. Weiterhin verfügt die Recheneinheit 3 über eine Zeitinformation. Im Datenspeicher 9 sind beispielsweise Informationen über die Komponenten des Fahrzeuges abgelegt. Als Komponenten des Fahrzeuges werden beispielsweise die Sensoren 4, die Stellglieder 11 und die Funktionen 5 angesehen.

Zudem ist eine zweite, externe Recheneinheit 8 vorgesehen, die über eine zweite Schnittstelle 7 verfügt. Weiterhin kann die zweite Recheneinheit 8 auf einen zweiten Datenspeicher 10 zugreifen. Abhängig von der gewählten Ausführungsform kann eine Kommunikationsverbindung zwischen dem Fahrzeug 1 und der externen Recheneinheit 8 direkt z.B. eine Funkverbindung, eine Mobiltelefonverbindung, WLAN und/oder LTE hergestellt werden. Weiterhin kann abhängig von der gewählten Ausführungsform eine Kommunikationsverbindung vom Fahrzeug 1 zur zweiten Recheneinheit 8 über wenigstens ein weiteres Fahrzeug hergestellt werden.

Die zweite Recheneinheit 8 kann mithilfe der zweiten Schnittstelle 7 beispielsweise auch auf weitere Datenbanken zugreifen. Dazu kann beispielsweise das Internet oder weitere Informationsdienste verwendet werden, um aktuelle Informationen über das Zielgebiet zu erhalten.

Abhängig von der gewählten Ausführungsform kann die Schnittstelle 2 auch mit einem Kommunikationsgerät verbunden sein, das im Fahrzeug 1 angeordnet ist. Das Kommunikationsgerät kann beispielsweise als Mobiltelefon, insbesondere als Smartphone oder als PC ausgebildet sein, die eine Kommunikationsverbindung aufbauen können. In diesem Fall kann die Recheneinheit 3 über das Kommunikationsgerät eine Verbindung zur externen Recheneinheit und/oder zu einem weiteren Fahrzeug aufbauen.

Fig. 2 zeigt ein Verfahren zum Betreiben eines Fahrzeuges mit einer Recheneinheit, wobei die Recheneinheit 3 des Fahrzeuges 1 bei Programmpunkt 100 eine Anfrage über die zweite Schnittstelle 7 an die externe Recheneinheit 8 übermittelt. Die Anfrage kann beispielsweise automatisch von der Recheneinheit 3 oder über eine entsprechende Eingabe durch eine Bedienperson über die Ein/Ausgabe 6 gestartet werden. Bei der Anfrage übermittelt die Recheneinheit 3 eine Kennung für eine Komponente des Fahrzeuges und ein Zielgebiet für das Fahrzeug. Das Zielgebiet kann von dem aktuellen Standort des Fahrzeuges entfernt sein oder auch mit diesem übereinstimmen. Die Information über die Fahrzeugkomponente identifiziert eindeutig die Komponente des Fahrzeuges.

Bei einem folgenden Programmpunkt 110 empfängt die zweite Recheneinheit 8 über die zweite Schnittstelle 7 die Anfrage der Recheneinheit 3 des Fahrzeuges 1. Aufgrund der Kennung für die Fahrzeugkomponente kann die zweite Recheneinheit 8 die Fahrzeugkomponente oder zumindest den Typ der Fahrzeugkomponente identifizieren. Dazu sind entsprechende Zuordnungen zwischen der Kennung und den Fahrzeugkomponenten oder den Typen der Fahrzeugkomponenten im zweiten Datenspeicher 10 abgelegt. Weiterhin können Vorschriften und/oder Regeln über die Funktionsfähigkeit bzw. die Erlaubnis die Fahrzeugkomponente zu benutzen, für festgelegte Umgebungsbedingungen und/oder festgelegte örtliche Gebiete im zweiten Datenspeicher 10 abgelegt sein. Zudem können im Datenspeicher 10 Algorithmen, Berechnungsmethoden und/oder Tabellen abgelegt sein, in denen eine Einschränkung einer Funktion der Komponente in Abhängigkeit von festgelegten Parametern und/oder Gebieten abgelegt sind. Als festgelegte Parameter können beispielsweise Temperaturen, Wetterbedingungen, Verkehrszustände, Fahrbahngeometrien usw. abgelegt sein.

Bei einem folgenden Programmpunkt 120 prüft die zweite Recheneinheit 8, ob für das übermittelte Zielgebiet für die übermittelte Fahrzeugkomponente eine Einschränkung der Funktion der Fahrzeugkomponente festgelegt ist oder möglich ist. Zur Überprüfung können auch logische Vergleiche oder Vorschriften im zweiten Datenspeicher 10 abgelegt sein. Zur Überprüfung der Einschränkung der Fahrzeugkomponente kann die zweite Recheneinheit 8 zusätzlich zu den Daten im zweiten Datenspeicher 10 auch auf weitere Datenbanken beispielsweise via Internet zugreifen. Dabei können beispielsweise folgende Bedingungen berücksichtigt werden: Temperatur, Wetterbedingungen, Verkehrsinformationen gesetzliche Bestimmungen usw. berücksichtigt werden.

Bei einem folgenden Programmpunkt 130 erstellt die zweite Recheneinheit 8 eine Antwort zu der Anfrage der Recheneinheit 3 und übermittelt diese über die zweite Schnittstelle 7 an die erste Schnittstelle 2 der Recheneinheit 3. Die Antwort beinhaltet die Information, ob die Benutzung der angefragten Komponente im Zielgebiet möglich, eingeschränkt möglich und/oder unzulässig ist.

Bei einem folgenden Programmpunkt 140 empfängt die Recheneinheit 3 die Antwort der zweiten Recheneinheit 8. Die Recheneinheit 3 kann die Antwort bei dem Betreiben des Fahrzeuges, insbesondere bei dem Betreiben der angefragten Fahrzeugkomponente berücksichtigen und/oder einen Hinweis an den Fahrer ausgeben. Beispielsweise kann die Benutzung einer Fahrzeugkomponente, wie z.B. eines Stellgliedes, eines Sensors, eines Fahrzeugsystems, einer Funktion wie z.B. Fahrzeugassistenzsystems eingeschränkt und/oder unterbunden werden abhängig von der Antwort der zweiten Recheneinheit 8. Abhängig von der gewählten Ausführungsform kann die Antwort der zweiten Recheneinheit 8 bereits eine Vorgabe für die Benutzung, die eingeschränkte Benutzung oder ein Verbieten der Benutzung der Komponente enthalten. Zudem kann die Antwort der zweiten Recheneinheit 8 auch einen Wert aufweisen, der von der Recheneinheit 3 nach festgelegten Vorgaben ausgewertet wird, um die Benutzung einer Komponente einzuschränken oder vollständig zu verbieten. Dazu kann im einfachsten Fall ein Vergleich mit einem Schwellwert verwendet werden. Überschreitet der Wert, der mit der Antwort der zweiten Recheneinheit 8 übermittelt wurde, den ersten Schwellwert, so wird eine eingeschränkte Benutzung der Komponente durch die Recheneinheit 3 durchgeführt. Überschreitet der Parameter beispielsweise einen zweiten, höheren Schwellwert, so wird die Benutzung der Komponente durch die Recheneinheit 3 vollständig unterbunden. Im einfachsten Fall kann auch nur ein Schwellwert verwendet werden, bei dessen Überschreitung die Komponente nicht verwendet wird.

In einer weiteren Ausführungsform kann die Anfrage der Recheneinheit 3 bei Programmpunkt 100 zusätzlich zu einem Zielgebiet, beispielsweise einem Landkreis, einem Stadtgebiet oder einem individuell festgelegten Gebiet noch eine Information über die aktuelle Ortposition des Fahrzeuges enthalten. Bei dieser Ausführungsform kann die zweite Recheneinheit 8 zusätzlich zu einer Information über eine Einschränkung einer Funktion der Komponente im Zielgebiet auch Informationen über eine Einschränkung der Funktion zwischen der aktuellen Ortposition und dem Zielgebiet mitteilen. Die Recheneinheit 3 kann entsprechend bereits auf dem Weg von der aktuellen Ortposition zum Zielgebiet eventuelle Beeinträchtigungen oder Einschränkungen oder Verbote der Komponente berücksichtigen und/oder dem Fahrer anzeigen.

Die Einschränkung einer Funktion einer Komponente kann zudem von einer Fahrbahngeometrie im Zielgebiet abhängen. Beispielsweise kann das Ziehen eines Anhängers auf einem steilen Pass bei zu geringer Motorisierung als Einschränkung bzw. Verbot der Komponente Ziehen eines Anhängers festgelegt sein. Zudem kann beispielsweise eine enge Straßenführung für ein zu breites Fahrzeug wie z.B. einem Kleinlaster oder einem LKW untersagt sein.

In einer weiteren Ausführungsform kann die Anfrage der Recheneinheit 3 an die zweite Recheneinheit 8 eine Information über die Zeit enthalten, zu der das Fahrzeug das Zielgebiet erreichen wird. Die zweite Recheneinheit 8 kann entsprechend bei der Überprüfung einer Einschränkung einer Funktion der Komponente die Zeit mitberücksichtigen. Dazu können entsprechende Vorgaben, Einschränkungen und Gebote oder Informationen über das Wetter abhängig von der Zeit der zweiten Recheneinheit 8 zur Verfügung stehen.

## Patentansprüche

1. Verfahren zum Betreiben eines Fahrzeuges mit einer Recheneinheit, mit wenigstens einer Fahrzeugkomponente, wobei die Recheneinheit des Fahrzeuges eine Anfrage an eine externe Recheneinheit sendet, wobei die Anfrage ein Zielgebiet für das Fahrzeug und eine Information über die Fahrzeugkomponente aufweist, wobei die Recheneinheit eine Information über eine Einschränkung einer Funktion der Komponente in dem Zielgebiet von der externen Recheneinheit empfängt, wobei die Recheneinheit die Information beim Betreiben des Fahrzeuges berücksichtigt und/oder an einen Fahrer ausgibt, wobei die Komponente ein Fahrzeugassistenzsystem ist, **dadurch gekennzeichnet, dass** die Recheneinheit bei der Anfrage zusätzlich eine Zeit übermittelt, zu der das Fahrzeug das Zielgebiet erreichen wird, und wobei die Recheneinheit von der externen Recheneinheit eine Information über eine Einschränkung einer Funktion der Komponente zu der angegebenen Zeit in dem Zielgebiet empfängt, wobei die Recheneinheit die Information beim Betreiben des Fahrzeugs berücksichtigt.

2. Verfahren nach Anspruch 1, wobei als Komponente ein Stellglied, ein Sensor, ein Fahrzeugsystem, eine Funktion des Fahrzeuges, die Art des verwendeten Antriebes und/oder die Weise der Verwendung des Antriebes verwendet wird.

3. Verfahren nach einem der vorhergehenden Ansprüche, wobei die Information über die Einschränkung eine Information über eine zuverlässige Funktion der Komponente im Zielgebiet beinhaltet.

4. Verfahren nach einem der vorhergehenden Ansprüche, wobei die Recheneinheit bei der Anfrage zusätzlich eine aktuelle Ortposition des Fahrzeuges übermittelt, und wobei die Recheneinheit von der externen Recheneinheit eine Information über eine Einschränkung einer Funktion der Komponente auf einem Weg von der aktuellen Ortposition zu dem Zielgebiet empfängt, wobei die Recheneinheit die Information beim Betreiben des Fahrzeuges berücksichtigt.

5. Verfahren nach einem der Ansprüche 1 bis 4, wobei die Einschränkungen von einem Wetter und/oder von einer Umgebungstemperatur und/oder von einer gesetzlichen Bestimmung, und/oder von einer Verkehrsinformation und/oder einer Fahrbahngeometrie und/oder einer Fahrbahnbeschaffenheit abhängt.

6. Verfahren nach einem der vorhergehenden Ansprüche, wobei die Recheneinheit ein Ein/Ausgabemittel aufweist, wobei eine Bedienperson die Anfrage eingibt oder wenigstens startet.

7. Verfahren zum Betreiben einer Recheneinheit, wobei die Recheneinheit eine Anfrage von einer Recheneinheit eines Fahrzeuges empfängt, wobei die Anfrage ein Zielgebiet für das Fahrzeug und eine Information über eine Fahrzeugkomponente aufweist, wobei die Recheneinheit überprüft, ob eine Einschränkung einer Funktion der Komponente in dem Zielgebiet vorliegt, und wobei die Recheneinheit eine Information über ein Vorliegen einer Einschränkung an die Recheneinheit des Fahrzeuges übermittelt, wobei die Komponente ein Fahrzeugassistenzsystem darstellt, wobei die Anfrage zusätzlich eine Zeit enthält, zu der das Fahrzeug das Zielgebiet erreichen wird, und wobei die Recheneinheit überprüft, ob zu der angegebenen Zeit eine Einschränkung einer Funktion der Komponente in dem Zielgebiet vorliegt, und wobei die Recheneinheit ein Ergebnis der Überprüfung an die Recheneinheit des Fahrzeuges übermittelt.

8. Verfahren nach Anspruch 7, wobei die Anfrage zusätzlich eine aktuelle Ortposition des Fahrzeuges enthält, und wobei die Recheneinheit überprüft, ob eine Einschränkung einer Funktion der Komponente auf einem Weg von der aktuellen Ortposition des Fahrzeuges zu dem Zielgebiet vorliegt, und wobei Recheneinheit ein Ergebnis der Überprüfung an die Recheneinheit des Fahrzeuges übermittelt.

9. Computerprogrammprodukt mit Programmcodemitteln, die ausgebildet sind, um bei einem Ablaufen auf einer Recheneinheit ein Verfahren nach einem der vorhergehenden Ansprüche auszuführen.

10. Recheneinheit eines Fahrzeuges, die ausgebildet ist, um ein Verfahren nach einem der Ansprüche 1 bis 6 durchzuführen.

11. Recheneinheit, die ausgebildet ist, um ein Verfahren nach einem der Ansprüche 7 bis 9 durchzuführen.

## Claims

1. Method for operating a vehicle having a computing unit and at least one vehicle component, wherein the computing unit of the vehicle sends an enquiry to an external computing unit, wherein the enquiry has a target area for the vehicle and information about the vehicle component, wherein the computing unit receives information about a limitation of a function of the component in the target area from the external computing unit, wherein the computing unit takes into account the information during the operation of the vehicle and/or outputs said information to a driver, wherein the component is a vehicle assistance system, **characterized in that** when the enquiry occurs the computing unit additionally transfers a time at which the vehicle will reach the target area, and wherein the computing unit receives, from the external computing unit, information about a limitation of a function of the component at the specified time in the target area, wherein the computing unit takes into account the information during the operation of the vehicle.

2. Method according to Claim 1, wherein an actuator element, a sensor, a vehicle system, a function of the vehicle, the type of drive used and/or the way of using the drive are used as a component.

3. Method according to one of the preceding claims, wherein the information about the limitation contains information about a reliable function of the component in the target area.

4. Method according to one of the preceding claims, wherein when the enquiry occurs the computing unit additionally transfers a current location position of the vehicle, and wherein the computing unit receives, from the external computing unit, information about a limitation of a function of the component on a path from the current location position to the target area, wherein the computing unit takes into account the information during the operation of the vehicle.

5. Method according to one of Claims 1 to 4, wherein the limitations depend on the weather and/or on an ambient temperature and/or on a legal regulation and/or on traffic information and/or on a carriageway geometry and/or on the condition of the carriageway.

6. Method according to one of the preceding claims, wherein the computing unit has an input/output means, wherein an operator enters, or at least starts, the enquiry.

7. Method for operating a computing unit, wherein the computing unit receives an enquiry from a computing unit of a vehicle, wherein the enquiry has a target area for the vehicle and information about a vehicle component, wherein the computing unit checks whether a limitation of a function of the component is present in the target area, and wherein the computing unit transfers information about the presence of a limitation to the computing unit of the vehicle, wherein the component constitutes a vehicle assistance system, wherein the enquiry additionally contains a time at which the vehicle will reach the target area, and wherein the computing unit checks whether a limitation of the function of the component is present in the target area and the specified time, and wherein the computing unit transfers a result of the checking to the computing unit of the vehicle.

8. Method according to Claim 7, wherein the enquiry additionally contains a current location position of the vehicle, and wherein the computing unit checks whether a limitation of a function of the component is present in a path from the current location position of the vehicle to the target area, and wherein the computing unit transfers a result of the checking to the computing unit of the vehicle.

9. Computer program product having program code means which are designed to carry out a method as claimed in one of the preceding claims when said program code means are run on a computing unit.

10. Computing unit of a vehicle, which is designed to carry out a method according to one of Claims 1 to 6.

11. Computing unit which is designed to carry out a method according to one of Claims 7 to 9.

## Revendications

1. Procédé pour faire fonctionner un véhicule avec une unité de calcul, comprenant au moins un composant de véhicule, l'unité de calcul du véhicule envoyant une demande à une unité de calcul externe, la demande présentant une zone de destination pour le véhicule et une information à propos du composant de véhicule, l'unité de calcul recevant de la part de l'unité de calcul externe une information à propos d'une restriction d'une fonction du composant dans la zone de destination, l'unité de calcul tenant compte de l'information en faisant fonctionner le véhicule et/ou la délivrant au conducteur, le composant étant un système d'assistance au conducteur, **caractérisé en ce que** l'unité de calcul, lors de la demande, communique en plus un moment auquel le véhicule atteindra la zone de destination, et l'unité de calcul recevant, de la part de l'unité de calcul externe, une information à propos d'une restriction d'une fonction du composant au moment indiqué dans la zone de destination, l'unité de calcul tenant compte de l'information en faisant fonctionner le véhicule.

2. Procédé selon la revendication 1, le composant utilisé étant un actionneur, un capteur, un système de véhicule, une fonction du véhicule, le mode du mécanisme propulseur utilisé et/ou la manière d'utiliser le mécanisme propulseur.

3. Procédé selon l'une des revendications précédentes, l'information à propos d'une restriction contenant une information à propos d'une fonction fiable du composant dans la zone de destination.

4. Procédé selon l'une des revendications précédentes, l'unité de calcul, lors de la demande, communiquant en plus une position spatiale actuelle du véhicule, et l'unité de calcul recevant, de la part de l'unité de calcul externe, une information à propos d'une restriction d'une fonction du composant sur un trajet de la position spatiale actuelle vers la zone de destination, l'unité de calcul tenant compte de l'information en faisant fonctionner le véhicule.

5. Procédé selon l'une des revendications 1 à 4, les restrictions dépendant d'une condition météorologique et/ou d'une température environnante et/ou d'une disposition légale et/ou d'une information de trafic et/ou d'une géométrie de la voie de circulation et/ou d'une nature de la voie de circulation.

6. Procédé selon l'une des revendications précédentes, l'unité de calcul possédant un moyen d'entrée/sortie, un opérateur saisissant ou au moins lançant la demande.

7. Procédé pour faire fonctionner une unité de calcul, l'unité de calcul recevant une demande de la part d'une unité de calcul d'un véhicule, la demande présentant une zone de destination pour le véhicule et une information à propos d'un composant de véhicule, l'unité de calcul vérifiant s'il existe une restriction d'une fonction du composant dans la zone de destination et l'unité de calcul communiquant à l'unité de calcul du véhicule une information à propos d'une présence d'une restriction, le composant représentant un système d'assistance au conducteur, la demande contenant en plus un moment auquel le véhicule atteindra la zone de destination, et l'unité de calcul vérifiant s'il existe une restriction d'une fonction du composant au moment indiqué dans la zone de destination, et l'unité de calcul communiquant un résultat de la vérification à l'unité de calcul du véhicule.

8. Procédé selon la revendication 7, la demande contenant en plus une position spatiale actuelle du véhicule, et l'unité de calcul vérifiant s'il existe une restriction d'une fonction du composant sur un trajet de la position spatiale actuelle du véhicule vers la zone de destination, et l'unité de calcul communiquant un résultat de la vérification à l'unité de calcul du véhicule.

9. Produit de programme informatique comprenant des moyens de code de programme qui sont configurés pour, lors d'une exécution sur une unité de calcul, mettre en oeuvre un procédé selon l'une des revendications précédentes.

10. Unité de calcul d'un véhicule, qui est configuré pour mettre en oeuvre un procédé selon l'une des revendications 1 à 6.

11. Unité de calcul, qui est configuré pour mettre en oeuvre un procédé selon l'une des revendications 7 à 9.
